# EUROPEAN PATENT SPECIFICATION

(11) **EP 1 207 315 B1**
(45) Date of publication and mention of the grant of the patent: **07.03.2007**
(21) Application number: 01309607.8
(22) Date of filing: 14.11.2001
(51) Int. Cl.: F16C 32/06

(54) **Air bearing**
Luftlager
Palier aérostatique

(30) Priority: 15.11.2000 GB 0027926
(43) Date of publication of application: 22.05.2002
(73) Proprietor: GSI Group Limited, Swift Valley Rugby Warwickshire CV21 1QN (GB)
(72) Inventor: Tempest, Michael Clinton, Holton Heath, Poole, Dorset BH16 6LN (GB); Pavey, Christopher John, Holton Heath, Poole, Dorset BH16 6LN (GB)
(74) Representative: Faulkner, Thomas John

(56) References cited:
- WO-A-98/35166
- GB-A- 1 001 335
- US-A- 2 539 072
- US-A- 3 746 233
- US-A- 4 285 551

## Description

This invention relates to air bearings, in particular high speed air bearings which are suitable for use in various high speed applications such as drilling.

Most often an air bearing spindle will comprise a stationary sleeve shaped bearing which surrounds a rotating shaft and for the sake of simplicity in the discussion below, and in the specific embodiment, this arrangement is assumed. However, it will be appreciated that it is entirely possible for the arrangement to be reversed. Jets and the associated supplies may be provided in a stationary shaft around which a sleeve rotates.

The use of air bearings in high speed applications is widespread and they are acknowledged to give extremely good performance. However, one problem from which air bearings can suffer is instability at high rotational velocities.

These instabilities often manifest themselves in a wobble or whirl of the shaft within the surrounding bearing. In general terms, the shaft and bearing system can be considered to be a forced damped oscillator and correspondingly there are resonant frequencies in the system where the instabilities reach a maximum. It is generally acknowledged that, due to a phenomenon known as half speed whirl, air bearings usually catastrophically fail at a rotational frequency equal to two times the first resonant frequency of the system. On the other hand, the first resonant frequency may be safely passed so that it is possible to operate air bearings at say 1.6 to 1.8 times the first resonant frequency. However, in this range of speeds the instabilities in the system are beginning to take hold and compromise the performance of the bearing.

Whilst a shaft is wobbling or whirling, the centre of the shaft, at some or all points, is orbiting the centre of the bore in the bearing. In half speed whirl, the shaft orbits at the first resonant frequency of the system whilst the shaft itself is spinning at two times the first resonant frequency of the system.

It is an object of this invention to provide air bearings which alleviate the problems caused by instabilities during high speed operation.

According to a first aspect of the present invention there is provided an air bearing spindle comprising a shaft and a surrounding sleeve, the shaft and the sleeve being rotatable relative to one another with an external surface of the shaft facing an internal surface of the sleeve, wherein one of said surfaces comprises at least two axially spaced series of circumferentially spaced jets and characterised by said one of said surfaces comprising at least two grooves each linking a respective jet in one of the series to a respective jet in another of the series, wherein one of the grooves is spaced in one direction around the circumference from an adjacent groove by a first spacing and is spaced in the opposite direction around the circumference from an adjacent groove by a second spacing and the first spacing is different from the second spacing.

According to a second aspect of the present invention there is provided a shaft for an air bearing spindle, the shaft having an external surface which comprises at least two axially spaced series of circumferentially spaced jets and the shaft being characterised by the external surface comprising at least two grooves each groove linking a respective jet in one of the series to a respective jet in another of the series wherein one of the grooves is spaced in one direction around the circumference from an adjacent groove by a first spacing and is spaced in the opposite direction around the circumference from an adjacent groove by a second spacing and the first spacing is different from the second spacing.

According to a third aspect of the present invention there is provided a sleeve for an air bearing spindle, the sleeve having an internal surface which comprises at least two axially spaced series of circumferentially spaced jets and the sleeve being characterised by the internal surface comprising at least two grooves each groove linking a respective jet in one of the series to a respective jet in another of the series wherein one of the grooves is spaced in one direction around the circumference from an adjacent groove by a first spacing and is spaced in the opposite direction around the circumference from an adjacent groove by a second spacing and the first spacing is different from the second spacing.

Preferably the or each groove is substantially axially oriented. This leads to the simplest manufacturing process. Although currently less preferred, the or each groove may follow a generally helical path.

Where there is a pair of grooves they may be substantially mutually parallel.

In preferred embodiments, besides the or each groove, there are no generally axial features on the respective surface. In one set of embodiments including a pair of grooves, there is a total of only two grooves.

Where there are two or more grooves it is preferably that the angular separation of the grooves is chosen to maximize their stabilizing damping effect on the air bearing spindle. More particularly, this damping effect should be realised at operational speeds. Typical operational speeds are in the range of 1.6 to 1.8 times the first resonant frequency of the system.

Where there is a pair of grooves it is preferred that they have an angular separation in the range of 110° to 160°. More preferably still, the angular separation is in the range of 130° to 140°. An angular separation of substantially 135° has been found particularly effective.

The or each groove may be flat bottomed with substantially perpendicular planar sides. This shape is simple to machine and gives an easily controllable volume. In alternatives the or each groove might be of another shape such as v-shape or generally trapeziform ie flatbottomed but with sloping sides.

The or each groove may have depth of a similar order to the clearance between the facing surfaces of the shaft and sleeve.

Typically each jet comprises a jet hole provided in a recess known as a pocket and the or each groove links respective pockets.

According to another aspect of the present invention there is provided a high speed drilling machine comprising an air bearing spindle as defined above.

According to yet another aspect of the present invention there is provided a high speed air bearing spindle comprising a shaft and a surrounding sleeve, which spindle is capable of operation at a rotational frequency in excess of the first resonant frequency of the high speed air bearing spindle and below twice said frequency, in which there is provided at least one groove arranged such that said groove increases the damping in the high speed air bearing spindle.

An embodiment of the present invention will now be described, by way of example only, with reference to the accompanying drawings in which:-
Figure 1 schematically shows an air bearing spindle mainly in section;
Figure 2 is a schematic perspective view of an air bearing sleeve;
Figure 3 is an underside view of the air bearing sleeve shown in Figure 2;
Figure 4 is a section on line IV - IV of the air bearing sleeve shown in Figure 3;
Figure 5 is a fragmentary view of the air bearing sleeve shown in Figures 2 to 4 showing a jet and groove in more detail, and
Figure 6 is a schematic sectional view on line VI - VI in Figure 5.

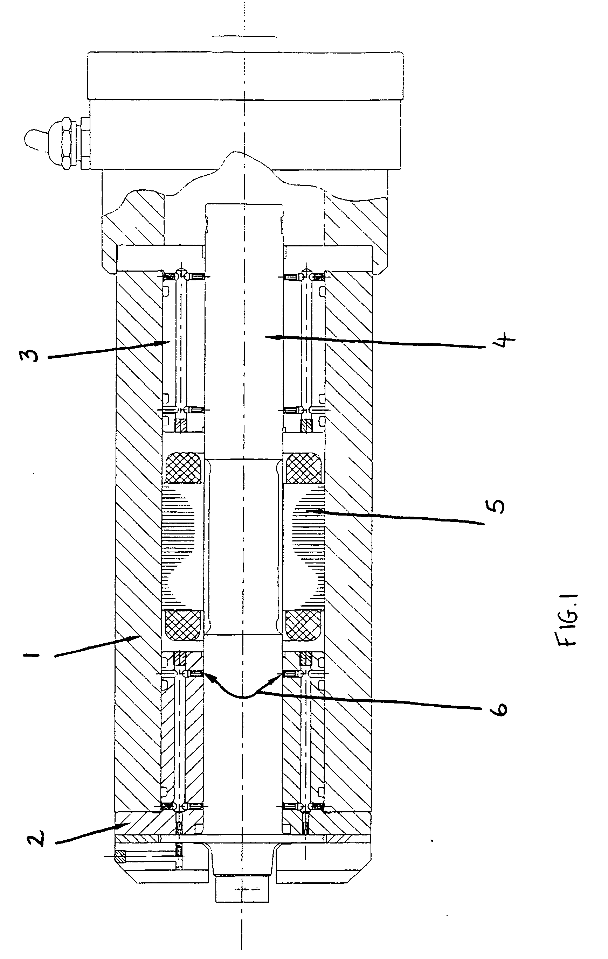

Figure 1 shows an air bearing spindle of a generally conventional construction. The air bearing spindle of the present embodiment is nominally hydrostatic but operates in a hybrid mode being neither purely hydrostatic or hydrodynamic. The spindle comprises a body 1 on which two sleeve shaped air bearings 2, 3 are mounted. A shaft 4 is mounted for rotation in the two bearings 2, 3. The shaft 4 is driven by an electric motor 5 disposed between the two bearings 2, 3. Each of the bearings comprises a plurality of jets 6 for the issuance of air during operation.

As mentioned above, the air bearing spindle is of generally conventional design and might for example be used in a high speed drilling machine. This invention relates to the particular arrangement of the bearing surfaces in the air bearings 2, 3 which will be described in more detail below. In terms of the features which are of interest in the present invention, the front bearing 2 and the rear bearing 3 are substantially identical and thus for the sake of brevity the remaining description is written in terms of the front bearing 2 only.

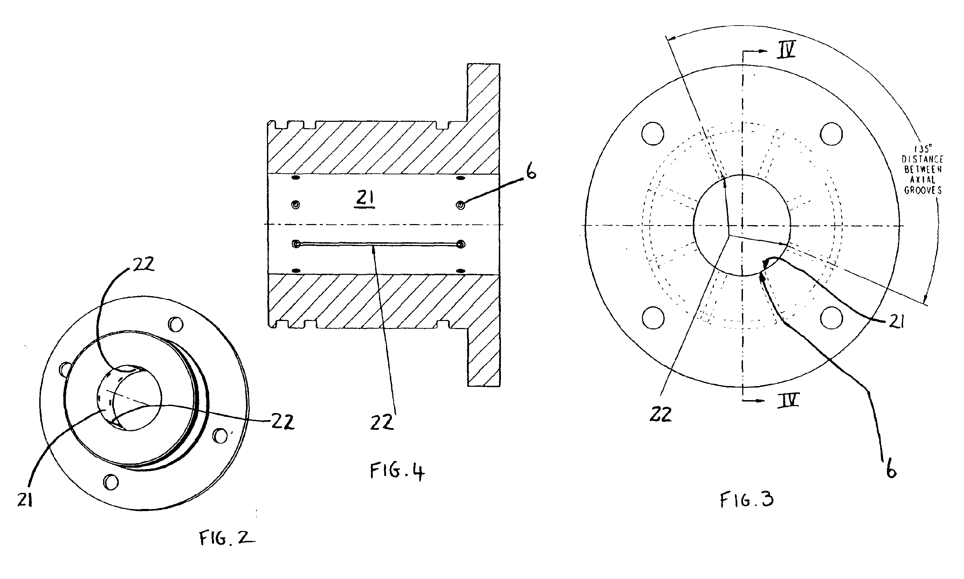

Referring to Figures 2, 3 and 4, the front bearing 2 comprises a bore defined by a generally cylindrical bearing surface 21. The bearing surface 21 comprises two series of eight radial air jets 6. The two series of jets 6 are axially spaced from one another whilst the jets 6 within each series are circumferentially equispaced. As can be seen most clearly in Figure 4, the two series of jets 6 are in register with one another, that is to say, each jet 6 in one series is at the same circumferential position as a respective jet in the other series.

A pair of axial grooves 22 are provided between respective pairs of jets 6. With the exception of the grooves 22, the bearing surface 21 is smooth to an extremely high degree of accuracy.

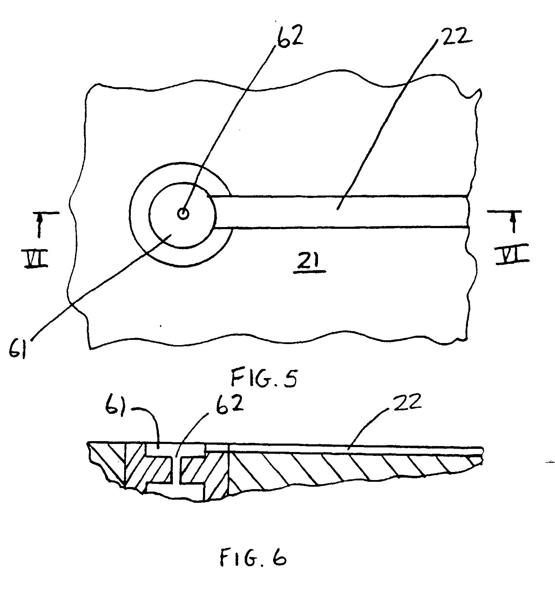

As more clearly shown in Figures 5 and 6 each jet comprises a generally circular pocket 61 at the centre of which is provided a jet hole 62. Each of the grooves 22 intersects with, and thus joins, a respective pair of pockets 61.

In the present embodiment each groove 22 is flat bottomed and has a pair of mutually parallel sides which are substantially perpendicular to the bottom of the groove 22. However, it should be noted that whilst this groove shape is preferred due to ease of machining and the ease of controlling the cross sectional area and hence volume of the groove, other groove shapes are possible. For example, each groove might be V shaped or generally trapeziform, i.e. having a flat bottom but sloped sides.

In a typical case the groove might have a depth of 0,025mm (one thousandth of an inch) and a width of 0,51mm (twenty thousandths of an inch). Further, in a typical bearing, the clearance between the bearing surface 21 and the outer surface of the shaft might be in the order of 0.015 to 0.018mm (6 to 7 tenthousandths of an inch). Thus the depth of each groove 22 is of a similar order to the overall clearance.

In the present embodiment the pair of axial grooves 22 have an angular separation of substantially 135°. This angular separation has been found to be particularly effective but it is expected that good results will be achieved if the angular separation is in the range of 110° to 160°. However, making the angular separation in the range 130° to 140° is more preferable.

At present, the applicants believe that an improvement in shaft running is achieved because the provision of the pair of grooves 22 increases the damping in the system and thus helps to control the undesirable wobble or whirl of the shaft. The aim is to position the grooves such that the greatest enhancement in smooth running operation is achieved. Thus in practice, for different designs of spindle, it can be possible to empirically determine the best angular separation for the grooves.

In the present embodiment, the pair of grooves run in an axial direction to a high degree of accuracy and are also parallel to one another. However, this is not essential. Whilst the provision of substantially axial and parallel grooves 22 is preferred, it is envisaged that other arrangements of grooves could function satisfactorily. In particular, the grooves might follow a helical path between the respective jets.
In the present embodiment the jets in each series are disposed on a respective common circumference. However, this is not essential, for example, the jets in each series might be axially staggered.

## Claims

1. An air bearing spindle comprising a shaft (4) and a surrounding sleeve (2, 3), the shaft (4) and the sleeve (2, 3) being rotatable relative to one another with an external surface of the shaft facing an internal surface of the sleeve (2, 3), wherein one of said surfaces comprises at least two axially spaced series of circumferentially spaced jets (6) and **characterised by** said one of said surfaces comprising at least two grooves (22) each linking a respective jet (6) in one of the series to a respective jet (6) in another of the series, wherein one of the grooves (22) is spaced in one direction around the circumference from an adjacent groove (22) by a first spacing and is spaced in the opposite direction around the circumference from an adjacent groove (22) by a second spacing and the first spacing is different from the second spacing.

2. An air bearing spindle according to claim 1 in which the at leas two grooves (22) are substantially mutually parallel.

3. An air bearing spindle according to either claim 1 or claim 2 in which the first spacing corresponds to an angular separation in the range of 110° to 160°.

4. An air bearing spindle according to claim 3 in which the first spacing corresponds to an angular separation is in the range of 130° to 140°.

5. An air bearing spindle according to claim 3 or claim 4 in which first spacing corresponds to angular separation of substantially 135°.

6. An air bearing spindle according to any one of claims 1 to 5 where there is a total of only two grooves (22) in the respective surface.

7. An air bearing spindle according to any one of claims 1 to 6 in which the angular separation of the grooves (22) is chosen to maximize their stabilizing damping effect on the air bearing spindle.

8. An air bearing spindle according to any preceding claim in which each groove (22) is substantially axially oriented.

9. An air bearing spindle according to any preceding claim in which besides each groove (22), there are no generally axial features on the respective surface.

10. An air bearing spindle according to any preceding claim in which each groove (22) is flat bottomed with substantially perpendicular planar sides.

11. An air bearing spindle according to any preceding claim in which each groove (22) has a depth of a similar order to the clearance between the facing surfaces of the shaft (4) and sleeve (2, 3).

12. A shaft (4) for an air bearing spindle, the shaft (4) having an external surface which comprises at least two axially spaced series of circumferentially spaced jets (6) and the shaft being **characterised by** the external surface comprising at least two grooves each groove (22) linking a respective jet (6) in one of the series to a respective jet (6) in another of the series wherein one of the grooves (22) is spaced in one direction around the circumference from an adjacent groove (22) by a first spacing and is spaced in the opposite direction around the circumference from an adjacent groove (22) by a second spacing and the first spacing is different from the second spacing.

13. A sleeve (2, 3) for an air bearing spindle, the sleeve (2, 3) having an internal surface which comprises at least two axially spaced series of circumferentially spaced jets (6) and the sleeve being **characterised by** the internal surface comprising at least two grooves (22) each groove (22) linking a respective jet (6) in one of the series to a respective jet (6) in another of the series wherein one of the grooves (22) is spaced in one direction around the circumference from an adjacent groove (22) by a first spacing and is spaced in the opposite direction around the circumference from an adjacent groove (22) by a second spacing and the first spacing is different from the second spacing.

14. A high speed drilling machine comprising an air bearing spindle according to any one of claims 1 to 11.

## Patentansprüche

1. Luftlagerspindel mit einer Welle (4) und einer sie umgebenden Manschette (2, 3), wobei die Welle (4) und die Manschette (2, 3) in bezug auf einander drehbar sind, die Außenfläche der Welle (4) der Innenfläche der Manschette (2, 3) gegenüberliegt und eine der Oberflächen mindestens zwei axial beabstandete Reihen von in Umfangsrichtung beabstandeten Düsen (6) aufweist, **dadurch gekennzeichnet, daß** eine der Oberflächen mindestens zwei Nuten (22) aufweist, die jeweils eine jeweilige Düse (6) in einer der Reihen mit einer jeweiligen Düse (6) in einer anderen der Reihen verbindet, wobei eine der Nuten (22) in einer Richtung um den Umfang um einen ersten Abstand von einer daneben liegenden Nut (22) und in der entgegengesetzten Richtung um den Umfang um einen zweiten Abstand von einer daneben liegenden Nut (22) beabstandet ist und sich der erste Abstand von dem zweiten Abstand unterscheidet.

2. Luftlagerspindel nach Anspruch 1, bei der die mindestens zwei Nuten (22) im wesentlichen parallel zueinander sind.

3. Luftlagerspindel nach Anspruch 1 oder 2, bei der der erste Abstand einem Winkelabstand im Bereich von 110° bis 160° entspricht.

4. Luftlagerspindel nach Anspruch 3, bei der der erste Abstand einem Winkelabstand im Bereich von 130° bis 140° entspricht.

5. Luftlagerspindel nach Anspruch 3 oder 4, bei der der erste Abstand einem Winkelabstand von im wesentlichen 135° entspricht.

6. Luftlagerspindel nach einem der Ansprüche 1 bis 5, bei der insgesamt nur zwei Nuten (22) in der jeweiligen Oberfläche vorgesehen sind.

7. Luftlagerspindel nach einem der Ansprüche 1 bis 6, bei der der Winkelabstand zwischen den Nuten (22) so gewählt ist, daß ihre Stabilisationsdämpfungswirkung auf die Luftlagerspindel maximiert wird.

8. Luftlagerspindel nach einem der vorhergehenden Ansprüche, bei der jede der Nuten (22) im wesentlichen axial ausgerichtet ist.

9. Luftlagerspindel nach einem der vorhergehenden Ansprüche, bei der sich außer jeder Nut (22) keine allgemein axialen Merkmale auf der jeweiligen Oberfläche befinden.

10. Luftlagerspindel nach einem der vorhergehenden Ansprüche, bei der jede der Nuten (22) einen flachen Boden mit im wesentlichen senkrechten, ebenen Seiten aufweist.

11. Luftlagerspindel nach einem der vorhergehenden Ansprüche, bei der jede der Nuten (22) eine Tiefe in einer ähnlichen Größenordnung aufweist, wie der Abstand zwischen den einander gegenüberliegenden Oberflächen der Welle (4) und der Manschette (2, 3).

12. Welle (4) für eine Luftlagerspindel mit einer Außenfläche, die mindestes zwei axial voneinander beabstandete Reihen von in Umfangsrichtung beabstandeten Düsen (6) aufweist, **dadurch gekennzeichnet, daß** die Außenfläche mindestens zwei Nuten (22) aufweist und jede Nut (22) eine jeweilige Düse (6) in einer der Reihen mit einer jeweiligen Düse (6) in einer anderen der Reihen verbindet, wobei eine der Nuten (22) in einer Richtung um den Umfang um einen ersten Abstand von einer daneben liegenden Nut (22) und in der entgegengesetzten Richtung um den Umfang um einen zweiten Abstand von einer daneben liegenden Nut (22) beabstandet ist und sich der erste Abstand von dem zweiten Abstand unterscheidet.

13. Manschette (2, 3) für eine Luftlagerspindel mit einer Innenfläche, die mindestes zwei axial voneinander beabstandete Reihen von in Umfangsrichtung beabstandeten Düsen (6) aufweist, **dadurch gekennzeichnet, daß** die Innenfläche mindestens zwei Nuten (22) aufweist und jede Nut (22) eine jeweilige Düse (6) in einer der Reihen mit einer jeweiligen Düse (6) in einer anderen der Reihen verbindet, wobei eine der Nuten (22) in einer Richtung um den Umfang um einen ersten Abstand von einer daneben liegenden Nut (22) und in der entgegengesetzten Richtung um den Umfang um einen zweiten Abstand von einer daneben liegenden Nut (22) beabstandet ist und sich der erste Abstand von dem zweiten Abstand unterscheidet.

14. Hochgeschwindigkeitsbohrmaschine mit einer Luftlagerspindel nach einem der Ansprüche 1 bis 11.

## Revendications

1. Broche avec palier à air comportant un arbre (4) et un manchon enveloppant (2, 3), l'arbre (4) et le manchon (2, 3) pouvant tourner l'un par rapport à l'autre avec une surface extérieure de l'arbre face à une surface intérieure du manchon (2, 3), une desdites surfaces comportant au moins deux séries espacées axialement de jets (6) espacés circonférentiellement et **caractérisée par le fait que** ladite une desdites surfaces comporte au moins deux rainures (22) reliant chacune un jet (6) respectif d'une des séries à un jet (6) respectif d'une autre des séries, l'une des rainures (22) étant espacée dans une direction autour de la circonférence par rapport à une rainure adjacente (22) par un premier espacement et étant espacée dans la direction opposée autour de la circonférence par rapport à une rainure adjacente (22) par un deuxième espacement, le premier espacement étant différent du deuxième espacement.

2. Broche avec palier à air selon la revendication 1, où les au moins deux rainures (22) sont sensiblement parallèles l'une à l'autre.

3. Broche avec palier à air selon l'une des revendications 1 et 2, où le premier espacement correspond à une séparation angulaire dans la plage de 110° à 160°.

4. Broche avec palier à air selon la revendication 3, où le premier espacement correspond à une séparation angulaire dans la plage de 130° à 140°.

5. Broche avec palier à air selon la revendication 3 ou la revendication 4, où le premier espacement correspond à une séparation angulaire valant sensiblement 135°.

6. Broche avec palier à air selon l'une quelconque des revendications 1 à 5, où il existe un total de deux rainures (22) seulement dans la surface en question.

7. Broche avec palier à air selon l'une quelconque des revendications 1 à 6, où la séparation angulaire des rainures (22) est choisie pour maximiser leur effet amortisseur stabilisant sur la broche avec palier à air.

8. Broche avec palier à air selon l'une quelconque des revendications précédentes, où chaque rainure (22) est orientée sensiblement axialement.

9. Broche avec palier à air selon l'une quelconque des revendications précédentes, où, à part chaque rainure (22), il n'existe aucun détail généralement axial sur la surface en question.

10. Broche avec palier à air selon l'une quelconque des revendications précédentes, où chaque rainure (22) présente un fond plat et des flancs planaires sensiblement perpendiculaires.

11. Broche avec palier à air selon l'une quelconque des revendications précédentes, où chaque rainure (22) présente une profondeur d'un ordre de grandeur similaire au jeu entre les surfaces de l'arbre (4) et du manchon (2, 3) qui se font face.

12. Arbre (4) pour broche avec palier à air, l'arbre (4) présentant une surface extérieure qui comporte au moins deux séries espacées axialement de jets (6) espacés circonférentiellement et l'arbre étant **caractérisé par le fait que** la surface extérieure comporte au moins deux rainures (22), chaque rainure (22) reliant un jet (6) respectif d'une des séries à un jet (6) respectif d'une autre des séries, l'une des rainures (22) étant espacée dans une direction autour de la circonférence par rapport à une rainure adjacente (22) par un premier espacement et étant espacée dans la direction opposée autour de la circonférence par rapport à une rainure adjacente (22) par un deuxième espacement, le premier espacement étant différent du deuxième espacement.

13. Manchon (2, 3) pour broche avec palier à air, le manchon (2, 3) présentant une surface intérieure qui comporte au moins deux séries espacées axialement de jets (6) espacés circonférentiellement et le manchon étant **caractérisé par le fait que** la surface intérieure comporte au moins deux rainures (22), chaque rainure (22) reliant un jet (6) respectif d'une des séries à un jet (6) respectif d'une autre des séries, l'une des rainures (22) étant espacée dans une direction autour de la circonférence par rapport à une rainure adjacente (22) par un premier espacement et étant espacée dans la direction opposée autour de la circonférence par rapport à une rainure adjacente (22) par un deuxième espacement, le premier espacement étant différent du deuxième espacement.

14. Machine de perçage à grande vitesse comportant une broche avec palier à air selon l'une quelconque des revendications 1 à 11.
